# EUROPÄISCHE PATENTANMELDUNG

(11) **EP 1 630 394 A2**
(43) Veröffentlichungstag der Anmeldung: **01.03.2006**
(21) Anmeldenummer: 05026435.7
(22) Anmeldetag: 24.09.1998
(51) Int. Cl.: F02D 41/40, F02D 21/08, F02D 43/00

(54) **Dieselmotor**

(30) Priorität: 13.11.1997 DE 19750226
(62) Teilanmeldung aus: 98118073.0
(71) Anmelder: DaimlerChrysler AG, 70567 Stuttgart (DE)
(72) Erfinder: Digeser, Steffen, 71069 Sindelfingen (DE); Duvinage, Frank, Dr., 73230 Kirchheim (DE); Fausten, Hans, 73278 Schlierbach (DE); Friess, Walter, 70597 Stuttgart (DE); Kerckhoff, Anton, Dr., 70193 Stuttgart (DE); Liebscher, Thomas, 70736 Fellbach (DE); Pischinger, Stefan, Prof., 52076 Aachen (DE); Stotz, Marco, 70771 Leinfelden-Echterdingen (DE)

(57) **Zusammenfassung**

Die Erfindung betrifft einen Dieselmotor mit einer Motorsteuerung (23) zur Einstellung von Betriebsgrößen des Dieselmotors (1) und mit einem von Abgasen des Dieselmotors (1) durchströmten Katalysator.

Bei einem Betrieb des Dieselmotors (1) mit einer Kraftstoff-Voreinspritzung und einer Kraftstoff-Haupteinspritzung sind Betriebsgrößen des Dieselmotors (1) von der Motorregelung (23) derart einstellbar, dass im Abgas des Dieselmotors (1) gegenüber einem normalen mageren Betrieb zusätzliche Reduktionsmittel bereitgestellt werden, derart, dass exotherme Reaktionen im Katalysator und eine Aufheizung der Katalysatoroberfläche ermöglicht sind, wobei zur Bereitstellung der zusätzlichen Reduktionsmittel eine Verminderung der dem Dieselmotor (1) zugeführten Frischluftmenge einstellbar ist.

## Beschreibung

Die Erfindung betrifft einen Dieselmotor mit einer Motorsteuerung zur Einstellung von Betriebsgrößen des Dieselmotors und mit einem von Abgasen des Dieselmotors durchströmten Katalysator.

Aus der DE 43 34 763 A1 ist ein Verfahren zum Betreiben einer Brennkraftmaschine bekannt, wobei in einer Abgasreinigungsanlage eine Adsorptionseinrichtung für Stickoxide (NOₓ) angeordnet ist. Bei einem Luft-Brennstoff-Verhältnis Lambda (λ), bei dem das in die Adsorptionseinrichtung einströmende Abgas "mager" ist, das heißt, wenn ein überstöchiometrisches Abgasgemisch mit λ>1 vorliegt, adsorbiert die Adsorptionseinrichtung NOₓ. Das adsorbierte und auf diese Weise gespeicherte NOₓ wird freigesetzt, wenn das Luft-Brennstoff-Verhältnis Lambda des in die Adsorptionseinrichtung einströmenden Abgases "fett" wird, das heißt, wenn λ<1 ist bzw. wenn die Verbrennungsabgase in einem unterstöchiometrischen Verhältnis vorliegen. Bei diesem bekannten Verfahren wird die Temperatur der NOₓ-Adsorptionseinrichtung durch Einspritzen von Brennstoff in das Abgas erhöht und durch Einblasen von Luft in das Abgas gesenkt, um die Arbeitstemperatur der NOₓ₋Speicher-einrichtung innerhalb eines festgelegten Bereiches zu halten.

Aus der DE 195 43 219 C1 ist ein Verfahren der eingangs genannten Art bekannt, bei dem ein stromab des Speicherkatalysators angeordneter Sensor zur Erfassung der NOₓ-Konzentration im Abgasstrom vorgesehen ist, der bei Erreichen eines kennfeldmäßig in Abhängigkeit von Drehzahl und Last variierenden NOₓ-Speicher-Schwellwertes ein Umschalten von einem Betrieb des Dieselmotors mit einem λ>1 auf einen Betrieb mit λ<1 auslöst. Bei einem Betrieb des Dieselmotors mit λ<1 wird dabei der Speicherkatalysator regeneriert und die Stickoxide NOₓ werden reduziert.

Die vorliegende Erfindung beschäftigt sich mit dem Problem, einen Dieselmotor mit einem von den Abgasen des Dieselmotors durchströmten Katalysator anzugeben, bei welchem die Betriebsbedingungen für eine möglichst wirksame Abgasreinigung auf effektive Weise erzielt werden können.

Dieses Problem wird erfindungsgemäß durch einen Dieselmotor mit den Merkmalen des Patentanspruches 1 gelöst. Die Merkmale der Unteransprüche geben vorteilhafte Aus- und Weiterbildungen der Erfindung an.

Die Erfindung beruht auf dem allgemeinen Gedanken, sowohl für den Mager-Betrieb als auch für den Fett-Betrieb des Dieselmotors separate Kennfelder bzw. separate Kennfeldgruppen vorzusehen, wodurch eine an das jeweilige Betriebsverhalten optimal angepaßte Motorabstimmung erzielt werden kann. Obwohl eine zur Bildung von reduzierendem Abgas notwendige unterstöchiomentrische Verbrennung (λ<1) im Dieselmotor während des Fett-Betriebes eine gegenüber dem Mager-Betrieb völlig geänderte Motorabstimmung, insbesondere hinsichtlich der Frischluftzufuhr und des Kraftstoffeinspritzvorganges, erforderlich macht, ist es mit Hilfe speziell ausgearbeiteter Kennlinien möglich, auch für den Fett-Betrieb ein zweckmäßiges und vorteilhaftes Betriebsverhalten für einen Dieselmotor zu gewährleisten. Beispielsweise ist es möglich, die Motorabstimmung derart auszugestalten, daß die Rußemissionswerte in akzeptablen Bereichen bleiben, wobei insbesondere kein sichtbarer Rauchausstoß stattfindet. Ebenso ist es möglich, mit Hilfe spezieller Kennfelder das Betriebsverhalten des Dieselmotors derart abzustimmen, daß der Fahrer und andere Fahrzeuginsassen das Umschalten zwischen den verschiedenen Betriebsphasen bzw. das Vorhandensein verschiedener Betriebsphasen nicht als störend empfinden bzw. erst gar nicht bemerken. Ein in dieser Hinsicht wichtiger Aspekt ist die Laufruhe des Dieselmotors, die mit Hilfe speziell ausgearbeiteter Kennlinien auch im Fett-Betrieb in akzeptablen Bereichen gehalten werden kann.

Um einen Fett-Betrieb des Dieselmotors zu erhalten, während dem ein dem Dieselmotor nachgeschaltetes Adsorbersystem regeneriert wird, kann der Dieselmotor beispielsweise mit einer im Vergleich zum Mager-Betrieb erhöhten Kraftstoffzufuhr betrieben werden.

Entsprechend einer bevorzugten Ausführungsform des erfindungsgemäßen Verfahrens sind zu diesem Zweck die Kennfelder für den Fett-Betrieb des Dieselmotors so gewählt, daß im Vergleich zum Mager-Betrieb die Treibstoff-Verbrennung in der jeweiligen Brennkammer erst relativ weit nach dem oberen Totpunkt des jeweiligen Kolbens, das heißt bei relativ großen Kurbelwellenwinkeln stattfindet. Die Kraftstoff-Verbrennung bei Dieselkraftstoffen setzt sich aus einer Vorverbrennung (Vorgemischverbrennung) und aus einer Hauptverbrennung (Diffusionsverbrennung) zusammen. Hier betrifft die späte Verbrennung im wesentlichen die diffuse Phase der Kraftstoffverbrennung. Da die Kraftstoffverbrennung erst spät stattfindet, kann sie nicht mehr vollständig ablaufen, so daß schon aus diesem Grund das Verbrennungsluftverhältnis Lambda herabgesetzt wird. Mit Hilfe dieser Maßnahme wird aber auch der Wirkungsgrad des Motors derart verschlechtert, daß deutlich höhere Kraftstoffmengen benötigt werden, um die gleiche Motorleistung wie im Mager-Betrieb erreichen zu können. Da bei einer gleichbleibenden Frischluftzufuhr die in dieser Phase vorhandene größere Treibstoffmenge teilweise nicht mehr verbrannt werden kann, wird ebenfalls das Verbrennungsluftverhältnis Lambda herabgesetzt und der Dieselmotor wird fett betrieben.

Der Zeitpunkt, zu dem die Diffusionsverbrennung des Kraftstoffes stattfindet, kann entsprechend einer Weiterbildung des erfindungsgemäßen Verfahrens durch den Zeitpunkt, zu dem die Kraftstoffhaupteinspritzung beginnt und/oder durch die Einspritzdauer und/oder durch die Einspritzmenge und/oder durch den Einspritzdruck beeinflußt werden. Beispielsweise wird durch einen späten Einspritzbeginn nur ein Teil der eingespritzten Kraftstoffmenge vollständig verbrannt, während der Rest der eingespritzten Kraftstoffmenge im wesentlichen aufbereitet, d.h. die langkettigen Kraftstoffmoleküle werden zu kurzkettigen Molekülen aufgebrochen ("gecracked"), und oxidiert wird. Dies führt bei diesem fetten Motorbetrieb zu einer stark erhöhten Emission an unverbrannten Kohlenwasserstoffen (HC) und Kohlenmonoxid (CO). Diese wunschgemäß erzielten Reaktionsprodukte HC und CO dienen auf Adsorberoberflächen als Reduktions-mittel zur Umsetzung von Stickoxiden NOₓ zu Stickstoff N₂. Somit weisen die Abgase bei einem fetten Motorbetrieb die zur Regeneration des Adsorbersystems notwendige reduzierende Atmosphäre auf.

Bei einer geeigneten Abstimmung der Einspritzparameter wie Beginn, Dauer, Menge, Druck, kann der Kraftstoffanteil, der an der Entfaltung der Motorleistung nicht beteiligt ist, das heißt der Kraftstoffanteil, der die reduzierende Atmosphäre im Abgas ausbildet, in einem begrenzten Bereich nahezu ohne Einfluß auf die Motorleistung variiert werden. Dies hat zur Folge, daß der Dieselmotor in diesem Bereich des Fett-Betriebes etwa die gleiche Leistung wie in dem entsprechenden Mager-Betrieb liefert. Der Wechsel zwischen den Betriebsarten kann somit vom Fahrer unbemerkt erfolgen. Gleichzeitig ermöglicht der obengenannte Bereich, in dem die eingespritzte Kraftstoffmenge nahezu ohne Motorleistungsveränderung variiert werden kann, eine gezielte Beeinflussung der Abgaszusammensetzung, insbesondere die Einstellung der Reduktionsmittelmenge auf eine gewünschte oder auf eine im jeweiligen Betriebspunkt erforderliche Größe. Ebenfalls kann durch die geeignete Wahl der Einspritzparameter, insbesondere durch den Einspritzbeginn und deren Dauer, das Verhältnis von Kohlenwasserstoffen zu Kohlenmonoxid in einer vorbestimmten Weise eingestellt werden.

Zur Verbesserung der Motorabstimmung kann entsprechend einer zweckmäßigen Ausgestaltung des erfindungsgemäßen Verfahrens vor der Kraftstoffhaupteinspritzung eine Kraftstoffvoreinspritzung erfolgen, die im Vergleich zum Mager-Betrieb hinsichtlich Einspritzbeginn und/oder Einspritzdauer verändert ist. Die Kraftstoffvorverbrennung hat ebenfalls Einfluß auf das Betriebsverhalten des Dieselmotors. Da es beim erfindungsgemäß vorgeschlagenen Betrieb des Dieselmotors mit sehr später Kraftstoff-Hauptverbrennung zu Vibrationen, insbesondere zu einem unruhigen Motorlauf kommen kann, wird die Voreinspritzung bei einer zweckmäßigen Ausgestaltung des erfindungsgemäßen Verfahrens hinsichtlich Einspritzbeginn und Einspritzdauer dahingehend auf die verzögerte Haupt- oder Diffusionsverbrennung abgestimmt, daß im wesentlichen wieder ein gleichmäßiger, ruhiger Motorlauf gewährleistet werden kann.

Mit den vorgenannten Maßnahmen zur Verzögerung der Kraftstoffhaupteinspritzung wird im wesentlichen die Diffusionsverbrennung beeinflußt.

Bei einer anderen, besonders vorteilhaften Ausführungsform des erfindungsgemäßen Verfahrens wird der Zeitpunkt für den Beginn der Kraftstoffhaupteinspritzung derart spät gewählt, daß sich bei einem Dieselmotor mit einer Abgasrückführung in Betriebspunkten mit einer relativ hohen Abgasrückführungsrate eine Vorgemischverbrennung einstellt. Dabei wird der Einspritzzeitpunkt vorzugsweise so gewählt, daß die Diffusionsverbrennung im überwiegenden Maße in eine Vorgemischverbrennung umschlägt. Diese Umstellung von Diffusionsverbrennung auf Vorgemischverbrennung erfolgt, da bei der sehr spät einsetzender Diffusionsverbrennung relativ große Mengen unverbrannter Kohlenwasser-stoffe entstehen, von denen ein großer Teil über die Abgasrückführung zusammen mit- Frischluft erneut den Brennräumen des Motors zugeführt wird. Infolge der dort stattfindenden Kompression kommt es dabei zu einem sehr guten homogenisierten Gemisch, das bei Erreichen der Zündgrenze noch weit vor dem oberen Totpunkt des jeweiligen Kolbens zu einer Vorgemischverbrennung führt. Dabei können ebenfalls Verbrennungsluftverhältnisse von λ<1 realisiert werden.

Entsprechend einer zweckmäßigen Weiterbildung kann bei einem solchen Einspritzverhalten, bei dem die vollständige Diffusionsverbrennung in eine überwiegende Vorgemischverbrennung umschlägt, zusätzliches Reduktionsmittel durch eine späte Kraftstoffnacheinspritzung erzeugt werden. Dabei wird der sehr spät nachgespritzte Kraftstoff im wesentlichen nur noch verdampft und, wenn überhaupt, nur zu einem geringen Anteil gecrackt und/oder verbrannt. Der verdampfte Kraftstoff dient im Abgas als zusätzliches, innermotorisch erzeugtes Reduktionsmittel, das zur Regeneration des Adsorbersystems verwendet werden kann.

Bei einer anderen vorteilhaften Ausführungsform des erfindungsgemäßen Verfahrens kann nach der Kraftstoffhaupteinspritzung eine Kraftstoffnacheinspritzung erfolgen, die insbesondere hinsichtlich Beginn, Dauer, Menge derart gewählt ist, daß in der Brennkammer im wesentlichen nur ein Aufbereiten, insbesondere ein Cracken des nacheingespritzten Kraftstoffes stattfindet. Auf diese Weise kann zusätzliches Reduktionsmittel in Form von Kohlenwasserstoffen HC in den Abgasen für die Regeneration des Katalysators bereitgestellt werden. Mit Hilfe dieser Maßnahme ist es einerseits möglich, das Verbrennungsluftverhältnis Lambda in gewünschter Weise zu variieren, andererseits kann durch eine gezielt eingesetzte Kraftstoffnacheinspritzung die Adsorber- bzw. Katalysatoroberfläche aufgrund einer dort stattfindenden exothermen Reaktion geheizt werden. Die Leistungsentfaltung des Dieselmotors soll dabei durch den nacheingespritzten Kraftstoff nicht beeinflußt werden.

Eine weitere Möglichkeit, einen Fett-Betrieb des Dieselmotors zu erhalten, wird bei einer anderen Ausführungsform des erfindungsgemäßen Verfahrens dadurch erzielt, daß das Kennfeld eine Vorgemischverbrennung zu einem Zeitpunkt vorsieht, der im Vergleich mit dem Mager-Betrieb relativ weit vor dem oberen Totpunkt des jeweiligen Kolbens liegt. Eine frühe Vorgemischverbrennung läßt sich insbesondere durch einen im Vergleich zum Mager-Betrieb frühen Beginn der Kraftstoffvoreinspritzung realisieren.

Um ein reduzierend wirkendes Abgas zu erhalten, können anstelle oder zusätzlich zu den oben beschriebenen Maßnahmen, mit denen der Verbrennung eine gegenüber dem Mager-Betrieb erhöhte Kraftstoffmenge zugeführt wird, auch Maßnahmen angewandt werden, bei denen der Verbrennung eine im Vergleich zum Mager-Betrieb verringerte Frischluftmenge zugeführt wird.

Bei einer zweckmäßigen Ausführungsform des erfindungsgemäßen Verfahrens kann zu diesem Zweck im Fett-Betrieb aufgrund entsprechend ausgebildeter Kennfelder der Einlaßquerschnitt im Ansaugtrakt jedes einzelnen Zylinders verringert werden. Dies kann insbesondere dadurch realisiert werden, daß im Ansaugbereich des jeweiligen Brennraumes eine Drosselklappe vorgesehen ist, die über ein Stellglied von einem hilfskraftbetätigten Stellantrieb betätigbar ist. Dieser Stellantrieb wird dabei in Abhängigkeit von Signalen der Motorregelung kennfeldmäßig gesteuert.

Eine wichtige Kenngröße für die Frischluftzufuhr ist das Spülgefälle. Das ist die Druckdifferenz zwischen dem Gasdruck, der auf der Austrittsseite der Zylinder herrscht - Abgasgegendruck - und dem Gasdruck, der auf der Eintrittsseite der Zylinder herrscht -Saugrohrdruck -. Bei einem Dieselmotor mit einer Abgasrückführungseinrichtung wirkt sich die Abgasrück-führungsrate auf die Frischluftzufuhr dahingehend aus, daß eine erhöhte Abgasrückführungsrate eine verringerte Frischluftzufuhr zur Folge hat. Bei einer besonders vorteilhaften Ausführungsform des erfindungsgemäßen Verfahrens kann in den Kennfeldern für den Fett-Betrieb des Dieselmotors vorgesehen sein, das Spülgefälle zu erhöhen. Da die Abgasrückführungsleitung mit einer Abgassammelkammer nach den Zylinder kommuniziert, weist das Abgas in der Abgasrückführung im wesentlichen ebenfalls den Abgasgegendruck auf. Folglich bewirkt ein erhöhtes Spülgefälle einen Anstieg der Abgasrückführungsrate und somit eine Reduzierung der Frischluftzufuhr, was den gewünschten Effekt eines verringerten Verbrennungsluftverhältnisses Lambda zur Folge hat.

Um das Spülgefälle zu erhöhen, schlägt eine andere Ausführungsform des erfindungsgemäßen Verfahrens vor, bei einem Dieselmotor mit einer Abgasrückführung die Frischluftzufuhr vor deren Durchmischung mit dem Abgasrückführungsstrom zu drosseln. Dabei verringert sich der Druck im Saugrohr und das Spülgefälle steigt. Dies hat zur Folge, dass bei gleichem Abgasrückführungsventil-Öffnungsquerschnitt die dem Motor über die Abgasrückführung zugeführte Abgasmenge, das heißt die Abgasrückführungsrate, erhöht wird.

Bei einer anderen Ausführungsform des erfindungsgemäßen Verfahrens kann das Spülgefälle zwischen Abgasgegendruck und Saugrohrdruck auch dadurch erhöht werden, daß der Abgasgegendruck, beispielsweise durch eine Drossel, erhöht wird. Insbesondere ist es bei einem Dieselmotor mit einem Abgasturbolader möglich, den Turbineneintrittsquerschnitt und/oder das durch den Abgasturbolader durchströmende Abgasvolumen zu verringern. Zu diesem Zweck können wiederum Stellglieder vorgesehen sein, die von einem hilfskraftbetätigten Stellantrieb in Abhängigkeit von Signalen der Motorregelung, insbesondere Kennfeld gesteuert betätigbar sind.

Weitere wichtige Merkmale und Vorteile ergeben sich aus den Unteransprüchen, den Zeichnungen und aus der nachfolgenden Figurenbeschreibung eines bevorzugten Ausführungsbeispieles anhand der Zeichnungen. Es zeigen, jeweils schematisch,
- Fig. 1: eine Anordnung eines Dieselmotors mit Abgasrückführung, Abgasturbolader und einer Motorsteuerung nebst zugehörigen Leitungen, die einzelne Aggregate mit der Motorsteuerung verbinden, und
- Fig. 2: einen Aufbau einer Motorsteuerung mit einem separate Kennfelder enthaltenden Speicher.

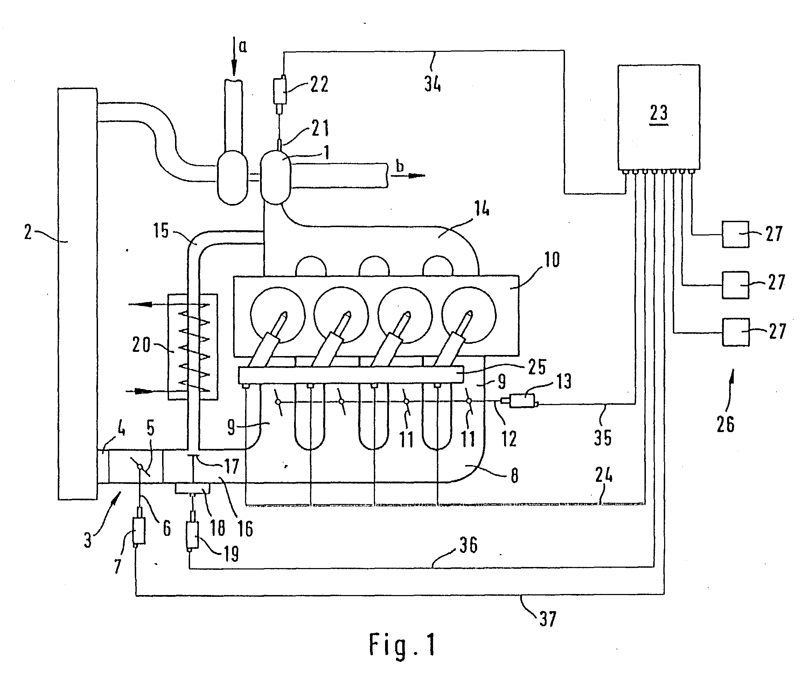

Entsprechend Fig. 1 saugt ein Abgasturbolader 1 auf seiner Verdichtereintrittsseite Frischluft entsprechend dem Pfeil a an. Diese durchströmt bei entsprechend erhöhtem Druck einen Wärmetauscher 2 und erreicht eine Drosselstelle 3 in der Ansaugleitung 4.

In der Drosselstelle 3 ist eine Drosselklappe 5 angeordnet, die über ein Stellglied 6 von einem hilfskraftbetätigten Stellantrieb 7 betätigbar ist. Nach der Drosselstelle 3 durchquert die Frischluft zunächst ein Saugrohr 16 und erreicht dann eine Luftsammelkammer 8, von wo aus sie über separate Ansaugtrakte 9 den Brennbereichen des Dieselmotors 10 zugeführt wird. In den Ansaugtrakten 9 sind jeweils einzelne Drosselklappen 11 angeordnet, die entsprechend dem Ausführungsbeispiel über ein gemeinsames Stellglied 12 von einem hilfskraftbetätigten Stellantrieb 13 betätigbar sind.

Stromab des Motors 10 werden die während der Verbrennung gebildeten Abgase in einer Abgassammelkammer 14 gesammelt und zum Teil der Turbineneintrittsseite des Abgasturboladers 1 zugeführt. Außerdem kommuniziert die Abgassammelkammer 14 mit einer Abgasrückführungsleitung 15, die im Saugrohr 16, das heißt nach der Drosselstelle 3 und vor der Luftsammelkammer 8 in der Luftansaugleitung 4 mündet.

Im Mündungsbereich der Abgasrückführungsleitung 15 ist im Saugrohr 16 ein Ventil 17 angeordnet, daß über ein Stellglied 18 von einem hilfskraftbetätigten Stellantrieb 19 betätigbar ist. Im dargestellten Ausführungsbeispiel steht die Abgasrückführungsleitung 15 mit einem Wärmetauscher 20 im Wärmeaustausch, so daß ggf. eine Kühlung des rückgeführten Abgases erreicht werden kann.

Der Turbineneintrittsquerschnitt und/oder der die Turbine durchströmende Abgasvolumenstrom ist mit Hilfe eines Stellgliedes 21 veränderbar, das von einem hilfskraftbetätigten Stellantrieb 22 betätigbar ist. Nach dem Durchströmen der Turbine des Abgasturboladers 1 wird das Abgas entsprechend dem Pfeil b einem im übrigen nicht dargestellten Adsorbersystem zugeleitet.

Der Dieselmotor 10 wird von einer Motorsteuerung oder Motorregelung 23 gesteuert bzw. geregelt, wozu diese über Leitungen mit den entsprechenden Aggregaten des Dieselmotors 10 verbunden ist. Beispielsweise ist in der Fig. 1 eine Leitung 24 dargestellt, welche die Motorregelung 23 mit einer Einspritzanlage 25 des Dieselmotors 10 verbindet. Weitere Leitungen 34, 35, 36 und 37 verbinden die Motorregelung 23 mit den Stellantrieben 22, 13, 19 und 7. Darüber hinaus ist die Motorregelung 23 mit einer Sensorik 26 verbunden, deren Sensoren 27, die für den Betrieb des Dieselmotors 10 notwendigen Parameter detektieren, wobei beispielhaft nur drei Sensoren 27 dargestellt sind.

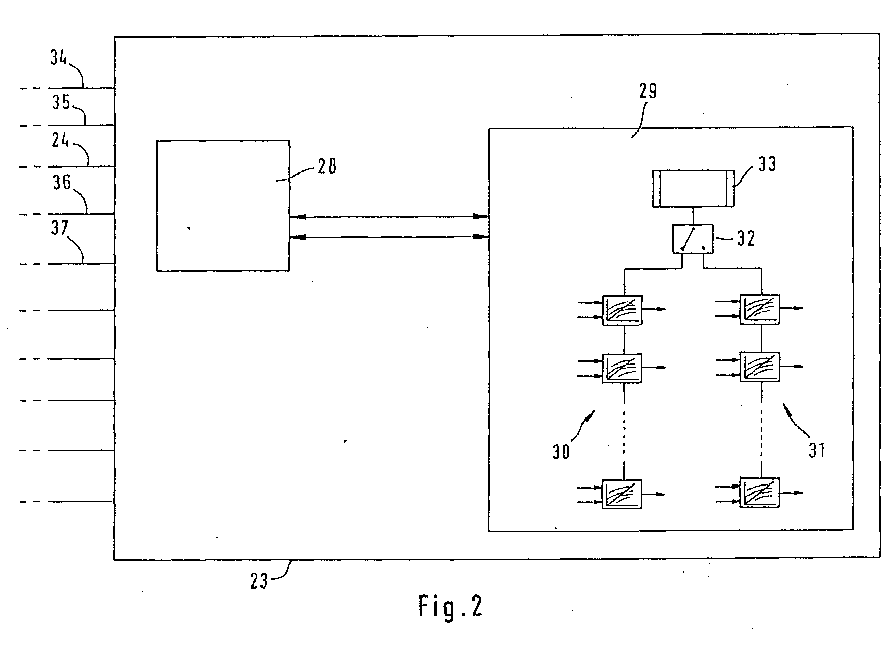

Entsprechend Fig. 2 enthält die Motorregelung 23 einen Rechner 28 sowie einen damit kommunizierenden Speicher 29. Im Speicher 29 sind die für den Betrieb des Dieselmotors 10 erfoderlichen Kennfelder, z.B. ein lastabhängiges Kennfeld für die Steuerung der Einspritzanlage 25 etc., gespeichert. Erfindungsgemäß sind dabei Kennfelder 30 für den Mager-Betrieb des Dieselmotors 10 und davon unabhängige, separate Kennfelder 31 für den Fett-Betrieb des Dieselmotors 10 vorgesehen. Auf welche Gruppe von Kennfeldern 30 oder 31 der Rechner 28 der Motorregelung 23 zugreifen kann, wird über einen Softwareschalter 32 festgelegt, dessen Schaltstellung sich anband von im Speicher 29 abgespeicherten Umschaltkriterien 33 bestimmt wird. In der dargestellten Schaltstellung arbeitet der Dieselmotor 10 dementsprechend im Magerbetrieb. Die Umschaltkriterien 33 werden ihrerseits vom Rechner 28 anband der von den Sensoren 27 der Sensorik 26 generierten Signale überwacht. Bei Erfüllung der vorbestimmten Umschaltkriterien 33 für ein Umschalten von Magerauf Fett-Betrieb wird der integrierte Softwareschalter 32 von der dargestellten Stellung für den Mager-Betrieb auf die andere Stellung umgeschaltet, bei der ein Zugriff auf die Kennfeldgruppe der für den Fett-Betrieb des Dieselmotors 10 zuständigen Kennfelder 31 ermöglicht wird.

Um einen unterstöchiometrischen Betrieb des Motors 10, das heißt einen Betrieb mit einem Verbrennungsluftverhältnis von □<1 zu ermöglichen, wird über die zugehörigen Kennfelder 31 die Motorregelung 23 dahingehend verändert, daß die Frischluftzufuhr zu den Brennräumen reduziert und alternativ oder zusätzlich dem Dieselmotor 10 eine gegenüber dem mageren Verbrennungsbetrieb deutlich erhöhte Kraftstoffmenge zugeführt wird.

Um die Kraftstoffmenge zu erhöhen, können verschiedene Maßnahmen durchgeführt werden, die im wesentlichen an die Betriebsparameter des Einspritzprozesses gekoppelt sind. Die entsprechenden Kennfelder 31 für den Fett-Betrieb bewirken dabei über die Motorregelung 23 eine Beeinflussung der Einspritzanlage 25.

Beispielsweise kann der Einspritzbeginn der für die Realisierung der im jeweiligen im Betriebspunkt des Motors 10 erforderlichen Motorlast notwendigen Kraftstoffmenge in Richtung später Kurbelwellenwinkel, das heißt weit nach dem oberen Totpunkt des jeweiligen Kolbens, verschoben werden. Um bei einem auf diese Weise erheblich verschlechterten Wirkungsgrad die gleiche Motorleistung erhalten zu können, muß eine deutlich höhere Kraftstoffmenge eingespritzt werden, mit der Folge, daß das Verbrennungsluftverhältnis Lambda herabgesetzt wird. Die durch die unvollständige Verbrennung gebildeten Kohlenwasserstoffe HC und das Kohlenmonoxid CO schaffen eine reduzierende Atmosphäre im Abgasstrom b, die zur Regenerierung des Adsorber-Katalysators verwendet werden kann. Zusätzlich oder alternativ dazu kann der Einspritzdruck variiert werden, um dadurch ebenfalls die Zusammensetzung der Abgase zu beeinflussen.

Ebenfalls zusätzlich oder alternativ kann die Voreinspritzung hinsicht-lich Einspritzlage und Einspritzverlauf verändert werden, wodurch ein ggf. durch die späte Haupteinspritzung entstehender unrunder, unruhiger Motorlauf ausgeglichen werden kann.

Darüber hinaus kann zusätzlich oder alternativ eine Kraftstoff-Nacheinspritzung zum Einsatz kommen, wobei der nacheingespritzte Kraftstoff die Leistung des Dieselmotors 10 nicht beeinflußt, diese insbesondere nicht steigert. Denn die Nacheinspritzung erfolgt zu einem derart späten Zeitpunkt, daß der nachgespritzte Kraftstoff nur noch aufbereitet, das heißt gecrackt wird, wodurch zusätzliches Reduktionsmittel in Form kurzkettiger Kohlenwasserstoffe HC für die Regeneration des Katalysators bereitgestellt wird. Neben der Beeinflussung des Verbrennungsluftverhältnisses Lambda kann durch die Kraftstoff-Nacheinspritzung außerdem die Temperatur auf der zu regenerierenden Katalysatoroberfläche beeinffußt werden. Eine gezielt eingesetzte Kraftstoff-Nacheinspritzung bewirkt dabei ein Heizen der Katalysatoroberfläche.

Bei einem Dieselmotor 10 entsprechend Fig. 1, der eine Abgasrückführung 15 aufweist, kann auf besonders zweckmäßige Art und Weise eine unterstöchiometrische Verbrennung (□<1) erzielt werden, in dem der Einspritzzeitpunkt für die Kraftstoffhaupteinspritzung extrem spät gewählt wird. Denn bei einem bestimmten späten Einspritzzeitpunkt schlägt die vollständige Diffusionsverbrennung in eine überwiegende Vorgemischverbrennung um. Da bei der sehr spät einsetzenden Einspritzung ein großer Teil des Kraftstoffes nicht oder nur unvollständig verbrannt werden kann, gelangt ein entsprechend großer Anteil nicht verbrannter Kohlenwasserstoffe über die Abgasrückführung in den Brennraum zurück. Dort kommt es infolge der durch den aufsteigenden Kolben verursachten Kompression zu einem sehr guten homogenisierten Gemisch, das weit vor dem oberen Totpunkt des Kolbens die Zündgrenze erreicht und zu einer hauptsächlichen Vorgemischverbrennung führt. Die dadurch erreichte Vorgemischverbrennung führt dann ebenfalls zu dem Verbrennungsluftverhältnis von λ<1. Um zusätzliche Reduktionsmittel im Abgasstrom b zu halten, kann außerdem eine späte Kraftstoffnacheinspritzung durchgeführt werden, wobei der dann im wesentlichen nur noch verdampfende Kraftstoff selbst als innermotorisch erzeugtes Reduktionsmittel dient.

Da der Einspritzzeitpunkt, bei dem ein Umschlagen von Diffusionsverbrennung in Vorgemischverbrennung stattfindet von dem jeweiligen Betriebszustand des Dieselmotors 10 abhängt, wird ein derartiger Betrieb des Dieselmotors 10 zweckmäßigerweise mit speziell dazu angelegten Kennfeldern 31 durchgeführt.

Das Verbrennungsluftverhältnis Lambda kann bei entsprechend ausgelegten Kennfeldern 31 auch dadurch verringert werden, daß die dem Motor 10 zugeführte Frischluftmasse verringert wird. Die nachfolgend beschriebenen Maßnahmen zur Reduzierung der für die Verbrennung zur Verfügung stehenden Frischluftmasse können alternativ oder zusätzlich zu den vorangehend beschriebenen Maßnahmen zur Steigerung der der Verbrennung zugeführten Kraftstoffmenge ausgeführt werden. Durch die Kennfelder 31 für den Fett-Betrieb veranlaßt, kann die Motorregelung 23 über die Verbindungsleitung 35 den Stellantrieb 13 dahingehend steuern, daß dieser über das Stellglied 12 die Drosselklappen 11 derart verstellt, daß diese den jeweiligen Einlaßquerschnitt im Ansaugtrakt 9 der jeweiligen Zylinder reduzieren. Auf die Weise wird der Querschnitt für die Luftzufuhr aus der Luftsammelkammer 8 variabel verringert, so daß dem Motor 10 insgesamt weniger Luft zur Verbrennung zur Verfügung steht.

Ebenfalls über die Kennfelder 31 für den fetten Motorbetrieb kann die Motorregelung 23 über die Verbindungsleitung 37 den Stellantrieb 7 steuern. Um das Verbrennungsluftverhältnis zu reduzieren, bewirkt dabei der Stellantrieb 7 über sein Stellglied 6 ein Verstellen der Drosselklappe 5 dahingehend, daß die durch die Ansaugleitung 4 angesaugte Frischluft gedrosselt wird. Im Saugrohr 16, das sich an die Drosselstelle 3 anschließt, wird dadurch der Druck reduziert, während gleichzeitig das Spülgefäll- zwischen Abgasgegendruck und Saugrohrdruck steigt. Dies hat bei einem gleichbleibenden Öffnungsquerschnitt des Ventils 17 der Abgasrückführungsleitung 15 einen vergrößerten Abgasdurchsatz, das heißt eine erhöhte Abgasrückführrate, zur Folge. Durch diese Maßnahme wird somit das Verbrennungsluftverhältnis Lambda verringert.

Das Spülgefälle kann auch dadurch verändert werden, daß der Turbineneintrittsquerschnitt des Abgasturboladers 1 und/oder die durch die Turbine durchströmende Abgasmenge verändert wird. Eine derartige Veränderung kann durch die entsprechenden Kennfelder 31 über die Motorregelung 23 mittels der Verbindungsleitung 34 ausgelöst werden, wobei der Stellantrieb 22 das Stellglied 21 in der entsprechenden Weise betätigt. Bei den vorgenannten Möglichkeiten zur Beeinflussung der Zusammensetzung der Luftzufuhr wird das Spülgefälle zwischen Abgasgegendruck und Saugrohrdruck verändert, wodurch sich die Abgasrückführrate variieren läßt, ohne das dazu der Abgasrückführventilöffnungsquerschnitt verändert werden muß. Eine Veränderung der Zusammensetzung der der Verbrennung zugeführten Luft kann auch durch eine Veränderung des Abgasrückführventilöffnungsquerschnittes erzielt werden. Zu diesem Zweck bewirkt ein entsprechendes Kennfeld 31, daß die Motorregelung 23 über die Verbindungsleitung 36 den Stellantrieb 19 entsprechend ansteuert. Der Stellantrieb 19 bewirkt dabei über sein Stellglied 18 die gewünschte Verstellung des Ventils 17.

## Patentansprüche

1. Dieselmotor mit einer Motorsteuerung (23) zur Einstellung von Betriebsgrößen des Dieselmotors (1) und einem von Abgasen des Dieselmotors (1) durchströmten Katalysator, wobei bei einem Betrieb des Dieselmotors (1) mit einer Kraftstoff-Voreinspritzung und einer Kraftstoff-Haupteinspritzung Betriebsgrößen des Dieselmotors (1) von der Motorregelung (23) derart einstellbar sind, dass im Abgas des Dieselmotors (1) gegenüber einem normalen mageren Betrieb zusätzliche Reduktionsmittel bereitgestellt werden, derart, dass exotherme Reaktionen im Katalysator und eine Aufheizung der Katalysatoroberfläche ermöglicht sind, wobei zur Bereitstellung der zusätzlichen Reduktionsmittel eine Verminderung der dem Dieselmotor (1) zugeführten Frischluftmenge einstellbar ist.

2. Dieselmotor nach Anspruch 1,
**dadurch gekennzeichnet, dass**
zur Verminderung der dem Dieselmotor (1) zugeführten Frischluftmenge eine von einem Stellantrieb (7) betätigbare Drosselklappe (5) in einer Frischluftzuführung (4) vorgesehen ist.

3. Dieselmotor nach Anspruch 1 oder 2,
**dadurch gekennzeichnet, dass**
zur Bereitstellung der zusätzlichen Reduktionsmittel ferner eine gegenüber dem normalen mageren Betrieb erhöhte Abgasrückführmenge einstellbar ist.

4. Dieselmotor nach Anspruch 3,
**dadurch gekennzeichnet, dass**
zur Erhöhung der Abgasrückführmenge die Druckdifferenz -Spülgefälle- zwischen dem Druck der Gase nach der Verbrennung -Abgasgegendruck- und dem Druck der Gase vor der Verbrennung -Saugrohrdruck- erhöht werden kann.

5. Dieselmotor nach einem der Ansprüche 1 bis 4,
**dadurch gekennzeichnet, dass**
zur Bereitstellung der zusätzlichen Reduktionsmittel ferner eine nach der Kraftstoff-Haupteinspritzung erfolgende Kraftstoff-Nacheinspritzung einstellbar ist.

6. Dieselmotor nach Anspruch 5,
**dadurch gekennzeichnet, dass**
für die Kraftstoff-Nacheinspritzung ein derart später Zeitpunkt einstellbar ist, dass in dem jeweiligen Brennraum im wesentlichen ein Cracken oder Verdampfen des nacheingespritzten Kraftstoffs erfolgt.

7. Dieselmotor nach einem der Ansprüche 1 bis 6,
**dadurch gekennzeichnet, dass**
im Vergleich zum normalen mageren Betrieb der Zeitpunkt der Kraftstoff-Haupteinspritzung relativ spät gewählt ist und/oder der Einspritzdruck reduziert ist und/oder die Einspritzdauer verlängert ist und/oder die Einspritzmenge vergrößert ist.

8. Dieselmotor nach einem der Ansprüche 1 bis 7,
**dadurch gekennzeichnet, dass**
bei einem Betrieb des Dieselmotors (1) mit Bereitstellung der zusätzlichen Reduktionsmittel im Abgas für die Kraftstoff-Voreinspritzung ein im Vergleich zum normalen mageren Betrieb veränderter Einspritzbeginn und/oder eine veränderte Einspritzdauer vorgesehen ist.

9. Dieselmotor nach Anspruch 7 oder 8,
**dadurch gekennzeichnet, dass**
bei einem Betrieb des Dieselmotors (1) mit Bereitstellung der Reduktionsmittel im Abgas eine im Vergleich zum normalen mageren Betrieb verzögerte Hauptverbrennung einstellbar ist, wobei die Voreinspritzung hinsichtlich ihres Einspritzbeginns und/oder ihrer Einspritzdauer so abgestimmt werden kann, dass ein unvermindert gleichmäßiger Motorlauf gewährleistet ist.

10. Dieselmotor nach einem der Ansprüche 1 bis 9,
**dadurch gekennzeichnet, dass**
der Katalysator als NOx-Speicherkatalysator ausgeführt ist.
